# EUROPEAN PATENT APPLICATION

(11) **EP 0 544 333 A2**
(43) Date of publication of application: **02.06.1993**
(21) Application number: 92120337.8
(22) Date of filing: 27.11.1992
(51) Int. Cl.: H04N 3/15, H04N 5/335

(54) **Signal processor circuit**

(30) Priority: 28.11.1991 JP 315024/91
(71) Applicant: SONY CORPORATION, Tokyo (JP)
(72) Inventor: Yagi, Osamu, c/o Sony Corporation, Shinagawa-ku, Tokyo (JP); Wakagi, Toru, c/o Sony Corporation, Shinagawa-ku, Tokyo (JP)
(74) Representative: TER MEER - MÜLLER - STEINMEISTER & PARTNER

(57) **Abstract**

A signal processor circuit is provided in which a pair of luminance signals (OUT1, OUT2) which phases differ spatially by one horizontal line against each other are formed on the basis of output signals of a charge-coupled device imager (1) which delivers and simultaneoulsy outputs independent signals from its all picture elements.

## Description

### BACKGROUND OF THE INVENTION

### Field of the Invention:

The present invention generally relates to signal processor circuits and, more particularly, is directed to a signal processor circuit suitable for use with a charge-coupled device (CCD) camera, for example.

### Description of the Related Art:

In the conventional CCD camera, when reading pixel information from a CCD imager, pixel informations in the vertical direction are mixed one another and further a pair of pixel informations to be mixed is changed at every field, whereby a so-called 2 : 1 interlace scanning is performed. In this case, the number of horizontal scanning lines of a luminance signal (Y signal) is 262.5 per each field of a television.

However, the conventional CCD camera has the disadvantages that sharpness of color is degraded since the pixel informations are mixed and that resolution of an image in the vertical direction is poor since the number of the horizontal scanning lines of the Y signal is only 262.5 during one field of a television signal.

### OBJECTS AND SUMMARY OF THE INVENTION

Therefore, it is an object of the present invention to provide an improved signal processor circuit in which the aforementioned shortcomings and disadvantages encountered with the prior art can be eliminated.

More specifically, it is an object of the present invention to provide a signal processor circuit in which a sharpness of color is excellent and a resolution of an image in the vertical direction can be improved.

As an aspect of the present invention, a signal processor circuit is provided in which a pair of luminance signals which phases differ spatially by one horizontal line each other are formed on the basis of output signals, each being obtained from respective ones of all picture elements of a charge-coupled device imager and outputted simultaneously.

According to the signal processor circuit of the present invention, since a pair of Y signals which phases differ spatially by one horizontal scanning line are formed and outputted simultaneously, a Y signal which number of horizontal scanning lines is 525 per one field period of a TV can be obtained by utilizing the pair of Y signals, whereby the resolution of an image in the vertical scanning direction is improved. Further, since the output signals of the CCD imager are not mixed, sharpness of color of an image can also be improved and an image processing such as a moving vector detection can be performed easily.

The preceding and other objects, features, and advantages of the present invention will become apparent from the following detailed description of an illustrative embodiment thereof when read in conjunction with the accompanying drawings.

### BRIEF DESCRIPTION OF THE DRAWINGS

FIG. 1 is a schematic diagram illustrating a CCD imager to which an embodiment of the present invention is applied;
FIG. 2 is a schematic diagram used to explain pixel informations obtained from the CCD imager; and
FIG. 3 is a schematic diagram illustrating a circuit arrangement of a signal processor circuit according to the embodiment of the present invention.

### DETAILED DESCRIPTION OF THE PREFERRED EMBODIMENT

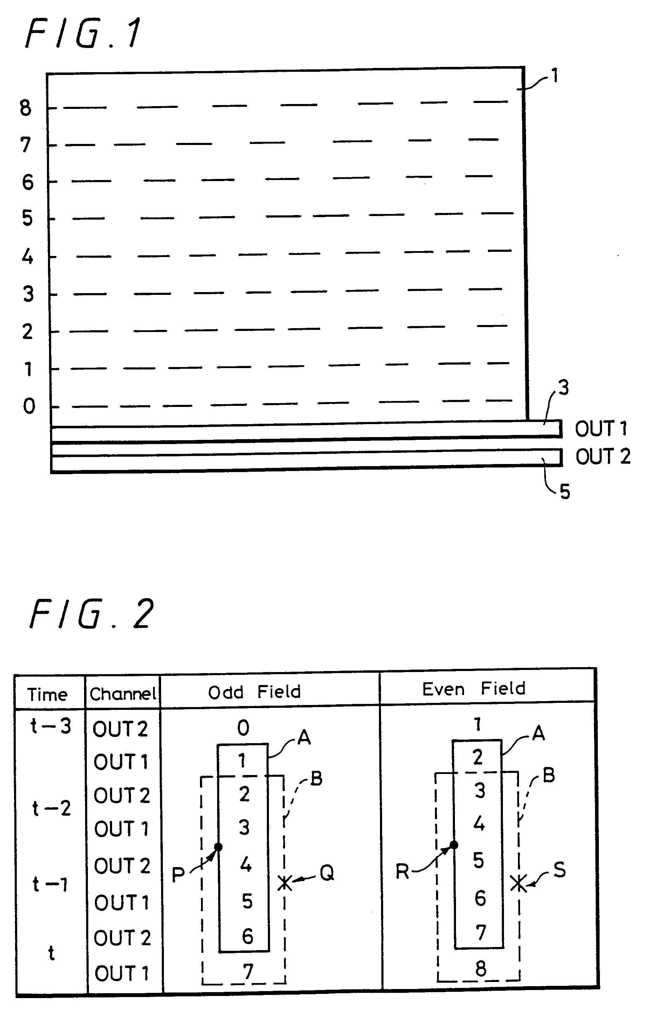

A signal processor circuit according to the embodiment of the present invention will now be described with reference to FIGS. 1 to 3, in which case, the present invention is applied to a CCD imager.

As shown in FIG. 1 of the accompanying drawings, a CCD imager 1 employed in this embodiment is provided with two horizontal registers 3 and 5, from which image signals OUT1 and OUT2 each obtained from respective ones of all picture elements of the CCD imager 1 are outputted, respectively. Reference numerals 0 to 8 shown at the left side of the CCD imager 1 in FIG. 1 respectively represent the line numbers of the picture elements.

As shown in FIG. 2 of the accompanying drawings, pixel informations of an odd field corresponding to the lines 0 to 7 and those of an even field corresponding to the lines 1 to 8 are obtained from the outputs OUT1 (channel 1) and OUT2 (channel 2) of the horizontal registers 3 and 5 by sequentially reading the outputs of the picture elements of the respective lines.

In this embodiment, a pair of Y signals of A channel and B channel are formed, and an arrangement and operations of the signal processor circuit of this embodiment for forming these Y signals will be explained in which the Y signal of each channel is formed on the basis of pixel information of six horizontal scanning lines, for example.

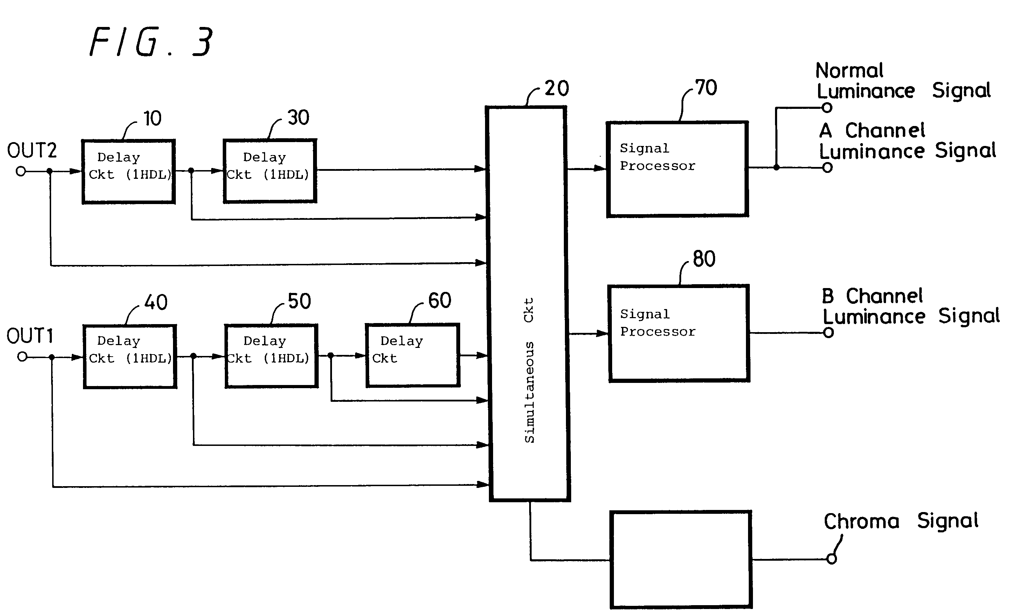

FIG. 3 of the accompanying drawings shows an arrangement of the signal processor circuit of this embodiment, in which each of delay circuits (1HDL) 10, 30, 40, 50 and 60 has a predetermined delay time equal to one horizontal scanning period, for example. Referring to FIG. 3, the output signal OUT2 of the horizontal register 5 is applied to the delay circuit 10 and also applied to a simultaneous or alignment circuit (ALT) 20. An output signal of the delay circuit 10 is applied to the simultaneous circuit 20 as well as the delay circuit 30, which in turn applies its output signal to the simultaneous circuit 20.

The output signal OUT1 of the horizontal register 3 is applied to the delay circuit 40 and also applied to the simultaneous circuit 20. An output signal of the delay circuit 40 is applied to the simultaneous circuit 20 as well as the delay circuit 50, which in turn applies its output signal to the simultaneous circuit 20 as well as the delay circuit 60. An output signal of the delay circuit 60 is applied to the simultaneous circuit 20.

The simultaneous circuit 20 aligns the pixel information of 6 horizontal scanning periods on the basis of the outputs of the delay circuits 10, 30, 40, 50 and 60. Namely, a phase of the Y signal of the A channel corresponding to the odd field is set at an intermediate point P between the lines 3 and 4 as shown in FIG. 2 when the lines 1 to 6 of the odd field is used.

In contrast, a phase of the Y signal of the B channel corresponding to the even field is set at an intermediate point Q between the lines 4 and 5 as shown in FIG. 2 when the lines 2 to 7 of the odd field are used.

Similarly, as shown in FIG. 2, a phase of the Y signal of the A channel is set at an intermediate point R between the lines 4 and 5 when the lines 2 to 7 of the even field are used, and further a phase of the Y signal of the B channel is set at an intermediate point S between the lines 5 and 6 when the lines 3 to 8 of the even field are used.

Namely, a phase of the Y signal differs spatially between the channels A and B by one horizontal scanning line, and Y signal processor circuits 70 and 80 (see FIG. 3) which receive the outputs from the simultaneous circuit 20 output Y signals corresponding to the channels A and B, respectively. In this case, the number of horizontal scanning lines of each of these Y signals is 262.5 per each field of a TV. Thus, a Y signal which number of horizontal lines is 525 per one field of a TV can be obtained by simultaneously utilizing the Y signals of the A and B channels.

Further, a Y signal obtained by the normal 2 : 1 interlace scanning having 262.5 lines per one field can be obtained by utilizing one of the Y signals of the A and B channels.

As described above, in accordance with the embodiment, a pair of Y signals which phases differ spatially by one line are formed on the basis of the output signals of the CCD imager 1, and then outputted as the Y signals of the A and B channels.

Thus, since the Y signal which number of horizontal lines is 525 per one field of a TV can be obtained, the resolution of an image in the vertical direction is improved. Further, since the output signals of the CCD imager 1 are not mixed, sharpness of color of an image can also be improved.

As set out above, according to this invention, since a pair of Y signals which phases differ spatially by one horizontal scanning line are formed and outputted simultaneously, a Y signal which number of horizontal scanning lines is 525 per one field period of a TV can be obtained by utilizing the pair of Y signals, whereby the resolution of an image in the vertical scanning direction is improved. Further, since the output signals of the CCD imager are not mixed, sharpness of color of an image can also be improved and an image processing such as a moving vector detection can be performed easily.

Having described a preferred embodiment of the invention with reference to the accompanying drawings, it is to be understood that the invention is not limited to the precise embodiment and that various changes and modifications thereof could be effected by one skilled in the art without departing from the spirit or scope of the invention as defined in the appended claims.

## Claims

1. A signal processor circuit wherein a pair of luminance signals which phases differ spatially by one horizontal line against each other are formed on the basis of output signals of a charge-coupled device imager (1) which delivers and simultaneously outputs independent signals (OUT 1, OUT 2) from its all picture elements.

2. The signal processor circuit according to claim 1, wherein a plurality of horizontal registers (3, 5) are provided for obtaining independent signals from all picture elements of the charge-coupled device imager (1).

3. The signal processor circuit according to claim 2, wherein the output signals of said plurality of horizontal registers (3, 5) are applied directly and through a delay circuit (10, 40) having a predetermined delay time to a simultaneous circuit (20).

4. The signal processor circuit according to claim 3, wherein the number of said horizontal registers (3, 5) is two.

5. The signal processor circuit according to claim 3, wherein said predetermined delay time equals to one horizontal scanning period of an image.

6. The signal processor circuit according to claim 3, wherein said simultaneous circuit (20) forms the pair of luminance signals on the basis of output signals of said charge-coupled device imager corresponding to six hori zontal scanning lines of an image.
